Europäisches Patentamt

European Patent Office

Office européen des brevets

(11) Veröffentlichungsnummer: **0 074 088**
**B1**

# EUROPÄISCHE PATENTSCHRIFT

(45) Veröffentlichungstag der Patentschrift:
21.05.86

(51) Int. Cl.⁴: **F 16 K 31/04**

(21) Anmeldenummer: 82108066.0

(22) Anmeldetag: 02.09.82

(54) Elektromotorischer Stellgliedantrieb für Ventile od. dgl.

(30) Priorität: 03.09.81 DE 3134820

(43) Veröffentlichungstag der Anmeldung:
16.03.83 Patentblatt 83/11

(45) Bekanntmachung des Hinweises auf die Patenterteilung:
21.05.86 Patentblatt 86/21

(84) Benannte Vertragsstaaten:
CH DE FR GB IT LI SE

(56) Entgegenhaltungen:
DE - A - 2 364 836
DE - C - 912 517
DE - U - 7 237 949

(73) Patentinhaber: Gronowski, Artur, Paderborner Strasse 194, D-4800 Bieleveld 11 (DE)

(72) Erfinder: Gronowski, Artur, Paderborner Strasse 194, D-4800 Bieleveld 11 (DE)

(74) Vertreter: Hoefer, Theodor, Dipl.-Ing., Kreuzstrasse 32, D-4800 Bielefeld 1 (DE)

## Beschreibung

Die Erfinding bezieht sich auf einen elektromotorischen Stellgliedantrieb für Ventile, Schieber od. dgl. mit drehmomentabhängiger Endlagenabschaltung des an einer Ventilstange angeordneten Verschlußstückes mittels eines endseitig an einer mittels Tellerfedern od.dgl. abgefederten Hubspindel angeordneten Schaltgliedes, das auf Endschalter einwirkt, sowie mit einem als Spindelmutter dienenden, die Hubspindel umgebenden Handrad das als Kupplung und als Drehsicherung für die Ventilstange, dient Bei derartiger z.B. aus DE-U-72 37 949 bekannten Stellgliedantrieben wird bei Erreichen der Endtagen des Verschlußstückes der Elektromotor des Antriebs, dessen Hubspindel mit einer undrehbaren Stange gekuppelt ist, rechtzeitig geschaltet. Diese an sich vorteilhafte Ausbildung zeigt jedoch den Nachteil, daß mit einer solchen Endlagenabschaltung keine Zwischenstellungen des Verschlußstückes eingestellt werden können, um noch einen gewissen Teil des Mediums durchzulassen.

Aufgabe der Erfindung ist es daher, einen Stellgliedantrieb der vorgenannten Gattung dahingehend zu verbessern, daß das Verschlußstück in konstruktionsmäßig einfacher Weise und sicher auf unterschiedliche Zwischenstellungen eingestellt werden kann, ohne dabei die Endschaltung (Schließ- oder Ganzoffenstellung) zu verändern, wobei die Zwischenstellungen in ihrer Einstellung von außen kontrollierbar und einstellbar sein sollen.

Gemäß der Erfindung wird diese Aufgabe bei einem gattungsgemäßen Stellgliedantrieb dadurch gelöst, daß zwei zusätzliche, den Weg der Ventilstange in einer oberen und/oder unteren Zwischenstellung begrenzende und parallel zu bzw. in deren Bewegungsrichtung angeordnette wegabhängige Anschläge, die von außen lageveränderbar am oder im teilweise offenen Ventilaufbau angeordnet sind, vorgesehen sind.

Diese Auschläge sind in ihrer Ausbildung einfach und halten in ihrer Wirkungsweise sicher das Verschlußstück in Zwischenstellungen (zwischen Zu und Ganzoffen.) Dabei kommt die drehmomentabhängige Schaltung des Antriebes auch voll zur Auswirkung. Dazu ist das Gehäuse durch Unterbrechungen z.B. durch käfigarte Ausbildung teilweise (nach außen) offen, so daß die Anschläge einerseits kontrolliert und/oder andererseits leicht von Hand verändert werden können.

Sofern bei einer bevorzugten Ausführungform diese Anschläge verstellbar durch Verschieben oder Verdrehen ausgebildet sind, so können beliebige Zwischenstellungen in einfacher Weise eingestellt werden.

Weitere Merkmale der Erfindung sind in den Unteransprüchen aufgeführt.

Auf den Zeichnungen sind Ausführungsbeispiele der Erfindung dargestellt. Es zeigen:

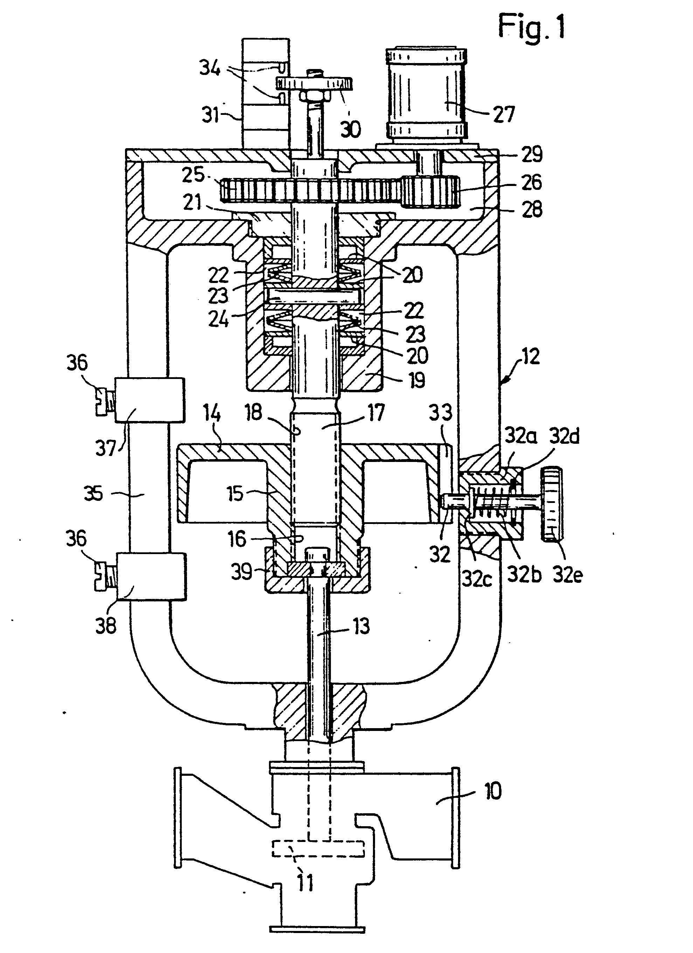

Fig. 1 eine Seitenansicht mit teilweisem senkrechten Schnitt eines Stellgliedantriebes;

Fig. 2 eine Seitenansicht mit teilweisem senkrechten Schnitt einer abgeänderten Ausführung eines Stellgliedantriebes und

Fig. 3 einen senkrechten Schnitt eines abgeänderten, den Feststellbolzen aufnehmenden Gehäuses.

An einem Dreiwegeventil 10 mit einem Verschlußstück 11 wie Ventilteller oder Ventilkegel ist ein als Käfig ausgebildetes Gehäuse 12 für den Stellgliedantrieb befestigt.

Eine an dem Verschlußstück 11 angeordnete, nicht drehbare Ventilstange 13 ragt in den Ventilaufbau oder das Gehäuse 12 hinein und ist endseitig an einem scheibenförmigen Handrad 14 als Spindelmutter wirkend befestigt, daß im Querschnitt T-förmig ausgebildet ist. Zentrisch in einem Ansatz 15 dieses Handrades 14 und in Verlängerung der Ventilstange 13 ist eine Gewindebohrung 16 eingearbeitet, in die eine drehbare Hubspindel 17 mit Außengewinde 16 eingeschraubt ist. Diese Hubspindel 17 durchfasß topfförmiges Gehäuse 19, in dem mehrere, die Hubspindel 17 umfassende Ringscheiben 20 angeordnet sind, wobei eine unter Ringscheibe 20 sich am topfförmigen Gehäuseboden 19 und eine obere Ringscheibe 20 an einem aufgeschraubten, das Gehäuse 19 schließenden Deckel 21 abstützt. Die mittleren beiden Ringscheiben 20, die den Innenraum des Gehäuse 19 in zwei Kammern 22 unterteilen, in denen jeweils zwei Tellerfedern 23 angeordnet sind, welche die Hubspindel 17 umgeben, sind mittels eines Splintes 24, Steckbolzen od. dgl. auf der Hubspindel 17 axial begrenzt gelagert und drücken die Tellerfedern 23 in axialer Richtung zum Auslösen des Schaltvorganges zusammen. Oberhalb dieses Gehäusetopfes 19, der durch einen abnehmbaren Deckel 21 abgedeckt ist, umfaß ein größeres Zahnrad 25 die Hubspindel 17 und kämmt mit einem kleineren Zahnrad 26, das von einem E-Motor 27 angetrieben werden kann.

Der ober im Gehäuse 12 zur Aufnahme der beiden Zahnräder vorgesehene Getrieberaum 28 ist ebenfalls durch einen abnehmbaren Deckel 29 abgeschlossen, durch den das obere Ende der Hubspindel 17 hindurchgeführt ist. Am freien Ende dieser Hubspindel 17 außerhalb des Gehäuses 12 lagert eine Rotationsscheibe 30, die bei Drehbewegung der Hubspindel 17 wechselweise links bzw. rechts verdreht wird und bei der axialen Verschiebung der Hubspindel 17 einen oberen bzw. unteren am Gehäuse 12 befestigten Endschalter 31 betätigt, durch den der E-Motor 27 geschaltet wird, sobald das Verschlußstück 11 eine seiner Endlagen erreicht hat.

Mit der motorischen Drehung der Hubspindel 17 bewegt sich dazu die Ventilstange 13 ohne Drehung nach unten bzw. oben, wobei das Handrad 14 gegen unbeabsichtigte Drehung mittels eines federnd gelagerten Feststellbolzens 32 festgelegt ist, dessen freies Ende in eine Längsnut 33 des Handrades 14 herausziehbar einfaßt.

Dieser Feststellbolzen 32 lagert in einem Gehäuse 32a, das rechtwinklig zur Hubspindel 17 in einem den Stege 35 des Ventilaufbaues 12 mittels Gewinde eingeschraubt ist und im Inneren eine Feder 32b aufnimmt. Die Feder 32b drückt einerseits mit einem Federende auf einen am Feststellbolzen 32 befindlichen Ringansatz 32c, während das andere Federende gegen einen im Gehäuse 32a befestigten Spannring 32d drückt, so daß der Feststellbolzen 32 stets in Richtung Längsnut 33 gedrückt ist. Soll das Handrad 14 in der Höhe verstellt werden, so wird der Feststellbolzen 32 mittels einer Rändelscheibe 32e aus der Längsnut 33 herausgezogen. Das Handrad 14 ist frei und kann so weit verdreht werden, bis die gewünschte Höhe erreicht ist und der Feststellbolzen 32 wieder einrasten kann.

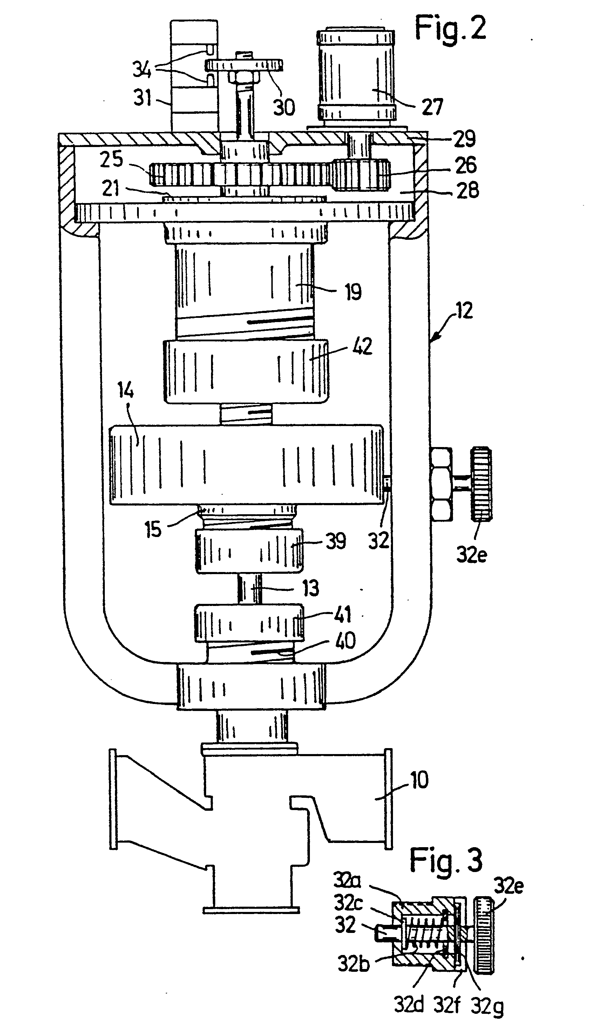

Um den Feststellbolzen 32 radial in seiner Lage zu halten, ist das Gehäuse 32a außenseitig mit einem senkrechten Schlitz 32f versehen, in den ein am Feststellbolzen 32 im Bereich der Rändelscheibe 32e befestigter Stift 32g eingreift, der mit dem Feststellbolzen 32 aus dem Schlitz 32f herausziehbar gehalten ist (vergl. Fig. 3).

Wenn das Verschlußstück 11 in seiner Endstellung auf dem Ventilsitz aufliegt, ist der Verschiebeweg der Ventilstange 13 nach unten beendet, so daß die Hubspindel 17 nach oben bewegt wird. Durch die axiale Verschiebung der Hubspindel 17 drückt die mittlere Ringscheibe 20 der Hubspindel 17 die oberen Tellerfedern 23 zusammen, wobei die Rotationsscheibe 30 den oberen Schaltstift 34 des Endschalters 31 betätigt und den Motor 27 abschaltet. Der Schaltvorgang in Öffnungsstellung des Verschlußstückes 11 erfolgt in umgekehrtem Sinne. Die mittlere Ringscheibe 20 drückt dabei auf die unteren Tellerfedern 23, wobei die Rotaionsscheibe 30 den unteren Schaltstift 34 betätigt und den Motor 27 schaltet.

Die Vorteile einer solchen drehmomentabhängigen Ausbildung und Schaltung durch Zwischenschaltung der Tellerfedern 23 liegen einerseits darin, daß der Ventilhub nicht genau eingestellt zu werden braucht und andererseits bei Vorhandensein eines Fremdkörpers zwischen Ventilsitz und Verschlußstück 11 der Antrieb ohne Erreichen seiner Endstellung zunächst abgeschaltet wird.

Diese an sich bekannte Ausführung wird verbessert durch eine gesonderte wegabhängige Schaltanordnung. Dazu sind an einem steg 35 als Käfig ausgestalteten (d.h. teilweise offenen) Gehäuses 12 in gewissem Abstande ein oberer mittels Schraube 36 od.dgl. verstellbarer Anschlag 37 und ein entsprechender unterer verstellbarer Anschlag 38 gelagert. Diese Anschläge 37, 38 haben die Aufgabe, daß das Verschlußstück 11 innerhalb des Hubbereiches jede Zwischenstellung einnehmen kann, z.B. bei gewissen Gasarmaturen, bei denen eine kleinere Gasmenge zum Aufrechterhalten der Zündflamme gewährleistet sein muß. Auch ist es oftmals notwendig bei Ventilen nicht die volle Gasmenge durchzulassen, so daß das Verschlußstück 11 bei Erreichen eines gewissen Hubes der Hubspindel (wegabhängig) stillgesetzt werden muß.

Sobald die obere oder untere Fläche des Handrades 14 den einen oder anderen seitlichen Anschlag 37, 38 berührt, hält die Ventilstange 13 an, während sich die Hubspindel 17 noch unter Einhaltung der gewünschten Schließkraft mittels der Tellerfedern 23 bewegt, bis der eine oder andere Schaltstift 34 betätigt wird, so daß dann erst der E-Motor 27 stillsteht.

Bei dem Ausführungsbeispiel gemäß Fig. 2 der Zeichnung ist bei sonstiger gleicher Ausbildung die Hubbegrenzung der Ventilstange 13 anstelle der Anschläge 37.38 von einer die Ventilstange 13 mit dem Handrad 14 verbindenden Mutter 39 und einer, auf einem die Ventilstange 13 umschließenden Gewindeansatz 40, einstellbarer Mutter 41 in einer Richtung und von einer auf das topfförmige Gehäuse 19 aufgeschraubten und einstellbaren Mutter 42 in anderer Richtung gebildet. Durch entsprechendes Verdrehen der Muttern 41, 42 wird der Hubweg des Handrades 14 in axialer Richtung begrenzt.

Da der Ventilaufbau 12 als Käfig und damit teilweise offen ausgebildet ist, können ebenfalls die als Anschläge wirkenden Muttern 39,41 und 42 in ihrer Stellung überprüft und von außen leicht in ihrer Lage verändert werden.

Durch Verstellen der Anschläge 37, 38,41,42 kann jede beliebige Zwischenstellung für das Verschlußstück 11 gewählt werden.

Sofern bei beiden Ausführungen der Antriebsmotor 27 ausfällt, kann das Handrad 14 nach Herausziehen des Feststellbolzens 32 derart von Hand gedreht werden, daß das Verschlußstück 11 ebenfalls seine gewünschte Endlage erreicht, um damit das Ventil ganz oder teilweise zu öffnen oder zu schließen.

**Patentansprüche**

1. Elektromotorischer Stellgliedantrieb für Ventile, Schieber od. dgl. mit drehmomentabhängiger Endlagenabschaltung (31, 34) des an einer Ventilstange (13) angeordneten Verschlußstückes (11) mittels eines endseitig an einer mittels Tellerfedern (23) od.dgl. abgefederten Hubspindel (17) angeordneten, auf Endschalter (31) einwirkenden Schaltgliedes (34) sowie mit einem als Spindelmutter dienenden, die Hubspindel (17) umgebenden Handrad (14) das als Kupplung und als Drehsicherung für die Ventilstange (13) dient, gekennzeichnet durch zwei zusätzliche, den Weg der Ventilstange (13) in einer oberen und/oder unteren Zwischenstellung begrenzende und parallel zu bzw. in deren Bewegungsrichtung angeordnete wegabhängige Anschläge (37, 38; 41, 42), die von außen lageveränderbar an bzw. in einem teilweise offenen Ventilauflau (12) angeordnet sind.

2. Stellgliedantrieb nach Anspruch 1, dadurch gekennzeichnet, daß die Anschläge (37,38) oberhalb und unterhalb des Handrades (14) an mindestens einem Steg (35) des als Käfig ausgebildeten Ventilaufbaues (12) angeordnet sind.

3. Stellgliedantrieb nach Anspruch 1, dadurch gekennzeichnet, daß die Anschläge (41,42) einerseits von einer das Handrad (14) mit der Ventilstange (13) verbindenden Mutter (39) sowie von einer auf einem die Ventilstange (13) umschließenden Gewindeansatz (40) drehbar gelagerten Mutter (41) und andererseits (in anderer Richtung) von einer auf ein topfförmiges, die Tellerfedern (23) aufnehmendes Gehäuse (19) aufgeschraubten Mutter (42) und dem Handrad (14) gebildet sind.

4. Stellgliedantrieb nach den Ansprüchen 1 bis 3, dadurch gekennzeichnet, daß das Handrad (14) mit einem an dem Ventilaufbau (12) angeordneten, gegen Drehung sichernden Feststellbolzer (32) ausgestattet ist.

## Claims

1. Electromotive adjusting member drive for valves, slides or the like, comprising a torque-dependent limit position shut-off means (31,34) for the closure member (11), which is disposed on a valve stem (13), by means of a switching member (34) which acts upon limit switch (31) and is disposed on one end of a lifting spindle (17) spring-mounted by means of cup springs (23) or the like, and comprising a handwheel (14) which serves as a spindle nut and surrounds the lifting spindle (17), which handwheel serves as a coupling means and a rotation-preventing means for the valve stem (13), characterised by two additional, travel-dependent stops (37,38; 41,42) which define the travel of the valve stem (13) in an upper and/or lower intermediate position and are disposed parallel to the direction of movement of said valve stem or respectively in the direction of movement of said valve stem, said stops being disposed on or in a partially open valve structure (12) so as to be position-variable from outside.

2. Adjusting member drive according to claim 1, characterised in that the stops (37,38) are disposed above and below the handwheel (14) on at leastone cross-piece member (35) of the valve structure (12) which is in the form of a cage.

3. Adjusting member drive according to claim 1, characterised in that the stops (41,42) are formed, on the one hand, by a nut (39), which connects the handwheel (14) to the valve stem (13), and by a nut (41) which is rotatably mounted on a threaded attachment (40) surrounding the valve stem (15) and, on the other hand (in the other direction), by a nut (42) and the handwheel (14), which nut is screw-connected to a cup-shaped housing (19) accommodating the cup springs (23).

4. Adjusting member drive according to claims 1 to 3, characterised in that the handwheel (14) is provided with a securing pin (32) which is disposed on the valve structure (12) and prevents rotation.

## Revendications

1. Entraînement d'organe de réglage par moteur électrique pour valves, tiroirs ou dispositifs similaires avec mise hors d'action (31, 34) en position extrême de l'obturateur (11) disposé sur une tige de valve (13), sous la dépendance du couple, au moyen d'un organe de manoeuvre (34) disposé sur une tige de levage (17) suspendue élastiquement au moyen de ressorts Belleville (23) ou similaires, organe qui agit sur des interrupteurs de fin de course (31), et aussi avec un volant à main (14) entourant la tise de levage (17), servant d'écrou de tige et qui sert d'accouplement et d'assujettissement de rotation pour la tige de valve (13), caractérisé par le fait qu'il est prévu deux butées supplémentaires (37, 38, 41, 42) dépendant de la course, limitant la course de la tige de valve (13) dans une position intermédiaire supérieure et/ou dans une position intermédiaire inférieure et disposées parallèlement à la direction de mouvement de la tige ou dans cette direction, qui sont disposées avec une position modifiable de l'extérieur sur ou dans la structure de valve (12) partiellement ouverte.

2. Entraînement d'organe de réglage selon la revendication 1, caractérisé par le fait que les butées (37, 38) sont disposées au dessus et en dessous du volant à main (14), sur au moins une nervure (35) de la structure de valve (12) conque sous forme de cage.

3. Entraînement d'organe de réglage selon la revendication 1, caractérisé par le fait que les butées (41, 42) sont formées d'une part par un écrou (39) reliant le volant à main (14) à la tige de valve (13) ainsi que par un écrou (41) monte de manière a pouvoir tourner sur un appendice fileté (40) entourant la tige de valve (13) et d'autre part (dans l'autre sens), par un écrou (42) vissé sur un carter en forme de pot (19) logeant les ressorts (23) et par le volant à main (14).

4. Entraînement d'organe de réglage selon les revendications: 1 à 3, caractérisé par le fait que le volant à main (14) est muni d'un boulon de blocage (32) assujettissant contre la rotation, disposé sur la structure de valve (12).

# Fig.1

Fig.2

Fig.3